# EUROPÄISCHE PATENTSCHRIFT

(11) **EP 2 870 184 B1**
(45) Veröffentlichungstag und Bekanntmachung des Hinweises auf die Patenterteilung: **14.12.2016**
(21) Anmeldenummer: 13744988.0
(22) Anmeldetag: 08.07.2013
(51) Int. Cl.: C08F 120/20, C08F 2/38, C08F 220/20, C09D 133/06, C09D 133/14, C09D 5/02, C09D 7/02, C09D 11/10

(54) **ADDITIVE FÜR STREICHFARBE**
ADDITIVE FOR PRINTING INK
ADDITIF POUR ENCRE D'IMPRIMERIE

(30) Priorität: 09.07.2012 DE 102012106145
(43) Veröffentlichungstag der Anmeldung: 13.05.2015
(73) Patentinhaber: Baumeister Chemicals & Consulting GmbH & Co. KG, 86167 Augsburg (DE)
(72) Erfinder: BAUMEISTER, Christoph, 80639 München (DE); BAUMEISTER, Manfred, 86153 Augsburg (DE)
(74) Vertreter: Wittmann, Ernst-Ulrich
(86) Internationale Anmeldenummer: PCT/EP2013/064351
(87) Internationale Veröffentlichungsnummer: WO 2014/009304

(56) Entgegenhaltungen:
- WO-A1-01/34906
- WO-A2-2004/045755
- JP-A- 2009 185 277
- JP-A- 2010 209 421

## Beschreibung

Eigenschaften von Papier lassen sich durch den Auftrag von Streichfarbe verändern und an verschiedene Anforderungen anpassen. Auch wenn die hierfür eingesetzten Rezepturen für Streichfarbe an den jeweiligen Anwendungsfall angepasst werden, so bleibt dennoch die Grundzusammensetzung einer Streichfarbe ähnlich und enthält die Hauptkomponenten: Pigment, Binder, Cobinder, Wasser sowie in geringeren Mengen Hilfsmittel, sogenannte Additive, zur Verbesserung der Verarbeitungseigenschaften.

Die vorliegende Erfindung betrifft ein Hilfsmittel zur Verbesserung der Verarbeitbarkeit von Streichfarben, beispielsweise zur Verwendung in einer Streichmaschine.

Für die Herstellung von gestrichenen Papieren ist es regelmäßig wünschenswert, Papierbeschichtungsmassen mit möglichst hohen Feststoffgehalten bereitzustellen, denn ein hoher Feststoffgehalt ermöglicht das Einsparen von Energie bei der Trocknung, das Einsparen von Binder in der Beschichtungsmasse sowie den Einsatz größerer oder gröberer Pigmente ohne dass Qualitätseinbußen des gestrichenen Papiers hingenommen werden müssen.

Auch wenn das Produkt "Streichfarbe" meist als sogenanntes "Fluid" eingesetzt wird, so ist es dennoch üblich jegliche Berechnung auf der Basis des Feststoffgehaltes der einzelnen Komponenten in der Dispersion durchzuführen. Der Hauptbestandteil des Feststoffgehaltes entfällt dabei auf das eingesetzte Pigment (Berechnung geht immer von 100 Gewichtsanteilen aus), die Feststoffanteile von Bindern und Additiven machen üblicherweise nicht mehr als weitere 5-15 Gew.-Teile aus. Durch die Zugabe oder Vorlage von Wasser kann dann die Streichfarbe auf einen gewünschten Feststoffgehalt oder mit anderen Worten Trockengehalt, der dann in Prozent (Gew.-%) angegeben wird, eingestellt werden.

Im Stand der Technik sind Papierbeschichtungsmassen mit Feststoffgehalten von 50% bis 78% beschrieben. Grundsätzlich führt eine Erhöhung des Feststoffgehaltes aber zwangsläufig zu einer Abnahme der Partikelstabilität und es nimmt die Neigung der Streichfarbe zur Bildung von Pigment-Binderagglomeraten mit der Zunahme des Feststoffgehaltes stark zu. Durch die Ansammlung von Agglomeraten unter dem Rakelmesser, kommt es am Rakelmesser zur Streifen- und Flitzerbildung, welche die Erzeugung verkaufsfähigen gestrichenen Papiers einschränkt oder nicht mehr zulässt.

Zur Stabilitätsverbesserung werden üblicherweise carboxylierte Kammpolymere mit Polyetherseitengruppen zugegeben. Diese Produkte ermöglichen eine Stabilitätserhöhung der dispersen Partikel vor allem bei hohen Feststoffgehalten, bei welchen die Abstände zwischen den Partikeln kleiner und attraktive van der Waals Kräfte zwischen den Partikeln aktiv werden, wodurch es letztlich zur Agglomeratbildung kommt. Die Polyethergruppen der eingesetzten Kammpolymere erfüllen dabei die Funktion eines mechanischen Abstandshalters zwischen den Partikeln und verhindern so die sonst unvermeidbare Agglomeratbildung bei Feststoffgehalten von >70%.

Allerdings interagieren die Carboxylatgruppen im Sinne einer Lewis-Base als e⁻-Donatoren mit anderen Bestandteilen der Streichfarbenzusammensetzung und insbesondere mit den Hydroxygruppen von Bindern, Cobindern und/oder Trägern beispielsweise Träger für optische Aufheller.

So werden zum Beispiel bei der Herstellung von hochweißem gestrichenem Papier auch sogenannte optische Aufheller eingesetzt. Diese Produkte müssen um einen Fluoreszenzeffekt zu erreichen in planarer Form auf einen geeigneten polymeren Träger aufgezogen werden. Das Aufziehen auf den Träger erfolgt durch Wechselwirkung des Pi-Elektronengerüstes des optischen Aufhellers mit elektronendefizitären polaren Gruppen, vor allem mit Hydroxygruppen. Da es sich bei den optischen Aufhellern in planarer Form um relativ große Moleküle handelt, eignen sich als Träger für diese Aufheller besonders hydroxygruppenhaltige Polymere mit hoher Taktizität.

Ein Polymer, welches diese Anforderungen optimal erfüllt und ein geeigneter Aufhellerträger ist, ist Polyvinylalkohol. Da Polyvinylalkohol (PVOH) zudem über exzellentes Pigmentbindevermögen verfügt, ist es bei der Herstellung hochweißer gestrichener Papiere unverzichtbar.

Allerdings interagieren die Hydroxygruppen von PVOH im Sinne einer Lewis-Säure mit den Carboxylatgruppen anderer Bestandteile der Streichfarbe, wodurch der Einsatz von PVOH in Streichfarben deutlich beschränkt wird. Hierbei zeigt Polyvinylalkohol vor allem bei pH-Werten um und unter pH 7 sehr starke Interaktionen mit Carboxylgruppen. Als Dispergier- bzw. Stabilisierungsmittel für Pigmente, werden üblicherweise niedermolekulare Polycarboxylate auf Acrylsäurebasis eingesetzt. Bei Zugabe von Polyvinylalkohollösung zu Rakelmesser zur Streifen- und Flitzerbildung, welche die Erzeugung verkaufsfähigen gestrichenen Papiers einschränkt oder nicht mehr zulässt.

Die WO2004045755, von EFKA Additives, offenbart wasserbasierendes Emulsionspolymer, aus vier verschiedene Monomere bestehend, dass als pigmentdispergiermittel geeignet ist und verbesserte Dispergierbarkeit aufweist.

Zur Stabilitätsverbesserung werden üblicherweise carboxylierte Kammpolymere mit Polyetherseitengruppen zugegeben. Diese Produkte ermöglichen eine Stabilitätserhöhung der dispersen Partikel vor allem bei hohen Feststoffgehalten, bei welchen die Abstände zwischen den Partikeln kleiner und attraktive van der Waals Kräfte zwischen den Partikeln aktiv werden, wodurch es letztlich zur Agglomeratbildung kommt. Die Polyethergruppen der eingesetzten Kammpolymere erfüllen dabei die Funktion eines mechanischen Abstandshalters zwischen den Partikeln und verhindern so die sonst unvermeidbare Agglomeratbildung bei Feststoffgehalten von >70%.

Beispiel für dies ist die JP2009185277 von Toyo INK MFG Co., in der eine Pigmentzusammensetzung umfassend ein Pigment, ein Dispersionsmittel mit einer aromatischen Carboxygruppe und ein Vinlyharz mit einer tertiären Amin-Gruppe, offenbart ist.

Ein weiteres Beispiel für die Benutzung von Carboxylatgruppen ist die JP2010209421, von Dainippon Ink & Chemicals, in der ein Schutzmittel für Metall-Nanopartikeln offenbart ist.

Allerdings interagieren die Carboxylatgruppen im Sinne einer Lewis-Base als e⁻-Donatoren mit anderen Bestandteilen der Streichfarbenzusammensetzung und insbesondere mit den Hydroxygruppen von Bindern, Cobindern und/oder Trägern beispielsweise Träger für optische Aufheller.

So werden zum Beispiel bei der Herstellung von hochweißem gestrichenem Papier auch sogenannte optische Aufheller eingesetzt. Diese Produkte müssen um einen Fluoreszenzeffekt zu erreichen in planarer Form auf einen geeigneten polymeren Träger aufgezogen werden. Das Aufziehen auf den Träger erfolgt durch Wechselwirkung des Pi-Elektronengerüstes des optischen Aufhellers mit elektronendefizitären polaren Gruppen, vor allem mit Hydroxygruppen. Da es sich bei den optischen Aufhellern in planarer Form um relativ große Moleküle handelt, eignen sich als Träger für diese Aufheller besonders hydroxygruppenhaltige Polymere mit hoher Taktizität.

Ein Polymer, welches diese Anforderungen optimal erfüllt und ein geeigneter Aufhellerträger ist, ist Polyvinylalkohol. Da Polyvinylalkohol (PVOH) zudem über exzellentes Pigmentbindevermögen verfügt, ist es bei der Herstellung hochweißer gestrichener Papiere unverzichtbar.

Allerdings interagieren die Hydroxygruppen von PVOH im Sinne einer Lewis-Säure mit den Carboxylatgruppen anderer Bestandteile der Streichfarbe, wodurch der Einsatz von PVOH in Streichfarben deutlich beschränkt wird. Hierbei zeigt Polyvinylalkohol vor allem bei pH-Werten um und unter pH 7 sehr starke Interaktionen mit Carboxylgruppen. Als Dispergier- bzw. Stabilisierungsmittel für Pigmente, werden üblicherweise niedermolekulare Polycarboxylate auf Acrylsäurebasis eingesetzt. Bei Zugabe von Polyvinylalkohollösung zu einer Pigmentdispersion bindet die leicht saure Polyvinylalkohollösung die Dispergier- und Stabilisierungsmittel auf Polycarboxylatbasis. Hierbei entstehen Pigmentagglomerate, welche sich auch bei sehr intensiver Mischung nicht mehr vollständig auflösen. Die Agglomeratbildung ist umso ausgeprägter je höher das Molekulargewicht des eingesetzten Polyvinylalkohols ist und je höher der Verseifungsgrad ist.

Zudem zeigt Polyvinylalkohol im alkalischen pH-Bereich, zwischen einem pH Wert von 7,5 und 10,0 - dies ist der pH-Bereich bei dem Papierstreichfarben üblicherweise verarbeitet werden - ausgeprägte inter- und intramolekulare Wechselwirkungen, die zur Gel-Bildung einer Polyvinylalkohollösung führen. Die gebildeten Gelpartikel zusammen mit den Pigmentagglomeraten verschlechtern die Laufeigenschaften der Streichfarbe am Rakel zusätzlich und es kommt zur Streifen- und Flitzerbildung.

Da die Agglomeratbildung in polyvinylhaltigen Streichfarben zu einer deutlichen Erhöhung der Hochscherviskosität, nämlich auf Werte von zwischen 120 - 190 mPa·s bei einem Schergefälle von 5*10⁵ s⁻¹ gemessen mit einem ACAV-Kapillarviskosimeter, führt, können polyvinylalkoholhaltige Streichfarben nur bei einem mittleren Feststoffgehalt von maximal 63 bis 68% verarbeitet werden, da es sonst am Rakelmesser zu hohen Anpressdrücken kommt bzw. solche erforderlich sind, um ein vorgegebenes Strichgewicht zu halten durch welche es dann vermehrt zu Bahnabrissen führt.

Dieses Ergebnis ist höchst unbefriedigend, da es vor allem aus energetischen Gründen wünschenswert wäre polyvinylalkoholhaltige Streichfarben bei hohen Feststoffgehalten bereit zu stellen. Allerdings zeigt die Praxis dass dies aus prozesstechnischen Gründen bislang nicht möglich ist. Aufgabe der Erfindung ist es, eine Lösung für dieses Problem zu finden.

Zur Lösung der Aufgabe stellt der Erfinder eine erfindungsgemäße Streichfarbe bereit, die auf einer Zusammensetzung basiert, die im Wesentlichen aus Pigment, Binder und/oder Cobinder, einem neuen Additiv, optional weiteren Additiven sowie Wasser besteht. Weiterhin stellt der Erfinder ein neues Additiv bereit, welches zur Streichfarbe, zur polyvinylhaltigen Streichfarbe, aber auch zu stärkebasierten Streichfarben zugegeben werden kann und die Verarbeitbarkeit der Streichfarbe insbesondere bei hohen Feststoffgehalten deutlich verbessert.

Als neues Additiv wird hierzu ein polymeres Amin bestehend aus substituierten Ethyleneinheiten bereit gestellt. Dieses eignet sich insbesondere als Zusatz zur Streichfarbe, welche neben dem polymeren Amin zusätzlich Pigment, Binder, Additive und Wasser enthält, wobei die Streichfarbe dadurch gekennzeichnet ist, dass das polymere Amin gemäß Anspruch 1 die allgemeine Formel I hat 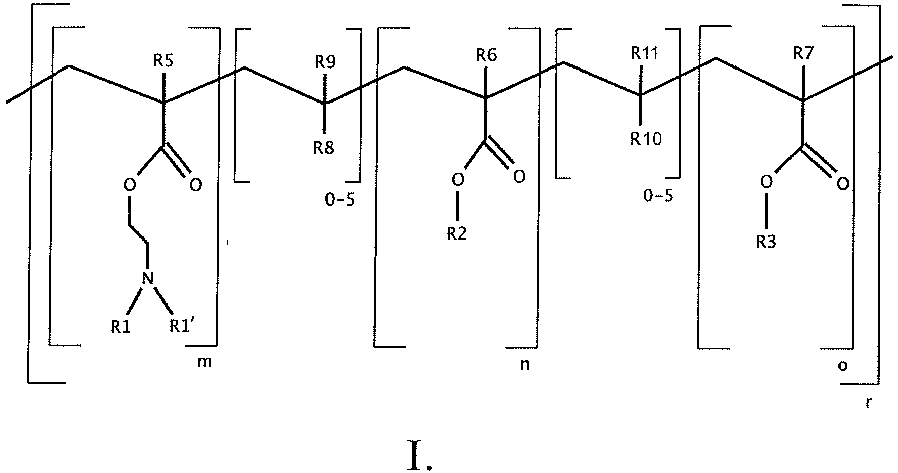
wobei die Kettenabschnitte n, m und/oder o jeweils unabhängig von einander eine Ethyleneinheit substituiert mit einer veresterten Carboxylgruppe vorzugweise in 1-3-Stellung sind;
wobei die Kettenabschnitte n, m und/oder o jeweils unabhängig von einander in variabler Reihenfolge auftreten können;
m und/oder n jeweils unabhängig voneinander eine ganze Zahl ausgewählt aus der Gruppe 1, 2 und 3 sind;
o eine ganze Zahl ausgewählt aus der Gruppe 0, 1, 2 und 3 ist;
die Kettenabschnitte n, m und/oder o jeweils unabhängig von einander durch 0 bis 5 Ethyleneinheiten, vorzugsweise durch 1, 2, 3, 4 oder 5 Ethyleneinheiten getrennt sind; r eine ganze Zahl ausgewählt aus der Gruppe 1, 2, 3, 4, 5, 6, 7, 8, 9, 10, 11 und 12 ist;
R1 und R1' jeweils unabhängig von einander ausgewählt sind aus der Gruppe bestehend aus H, Alkylresten, zyklische Alkylresten und Arylresten, insbesondere CH₃, C₂H₅, C₃H₇, C₄H₉, C₅H₁₁ und C₆H₅;
R2 ausgewählt ist aus der Gruppe bestehend aus Hydroxyalkylgruppen, insbesondere CH₂OH, C₂H₄OH, C₃H₆OH, C₄H₈OH, C₅H₁₀OH, C₆H₁₂OH und para-C₆H₄OH; R3 ausgewählt ist aus der Gruppe (CH₂CH₂O)_{q}R4, wobei q eine ganze Zahl ausgewählt aus der Gruppe 1 bis 40, vorzugsweise 1-10, weiter vorzugsweise 5-25, weiter vorzugsweise 15-35, weiter vorzugsweise 20-29, weiter vorzugsweise 25-35 oder weiter vorzugsweise 25-40 ist;
R4 ausgewählt sind aus der Gruppe bestehend aus H, Alkylresten, zyklische Alkylresten, Estern und Arylresten, insbesondere CH₃, C₂H₅, C₃H₇, C₂H₄OCH₃, C₄H₉, C₅H₁₁ und C₆H₅; R5, R6 und R7 jeweils unabhängig von einander ausgewählt sind aus der Gruppe bestehend aus H und CH₃;
R8 und R10 jeweils unabhängig von einander ausgewählt sind aus der Gruppe bestehend aus H, CH₃; und
R9 und R11 jeweils unabhängig von einander ausgewählt sind aus der Gruppe bestehend aus H, CH₃, CH₂CHCOOH, Acrylat, Vinylreste, CH₂CH₂, aromatische Phenylreste, und Styrol, nämlich C₈H₈.

Im polymeren Amin dienen die Kettenabschnitte m, n und/oder o als funktionelle Gruppen, wobei der Kettenabschnitt m als Ankergruppe, der Kettenabschnitt n und o als stabilisierender Bestandteil und/oder Abstandshalter wirken. Die zwischen den funktionellen Gruppen m, n und o befindlichen Verbindungsgruppen können je nach Länge und Art der Substituenten die hydrophoben Eigenschaften der Gesamtmoleküls verändern. Sofern z.B. Styrolreste als Substituenten vorliegen werden die hydrophoben Eigenschaften deutlich erhöht.

Das polymere Amin der erfindungsgemäßen Streichfarbe und das erfindungsgemäße polymere Amin weisen eine durchschnittliche Molekulargewichtsverteilung von 300 bis 20.000 g/mol auf. Gemäß weiterer Ausführungsformen weisen das polymere Amin der erfindungsgemäßen Streichfarbe und das erfindungsgemäße polymere Amin eine durchschnittliche Molekulargewichtsverteilung von vorzugsweise 300 bis 1500 g/mol, weiter vorzugsweise von 350 bis 2000 g/mol, weiter vorzugsweise von 400 bis 2500 g/mol, weiter vorzugsweise von 500 bis 2500 g/mol, weiter vorzugsweise von 900 bis 4000 g/mol, weiter vorzugsweise von 1000 bis 5000 g/mol, weiter vorzugsweise von 3000 bis 10.000 g/mol, weiter vorzugsweise von 5000 bis 15.000 g/mol oder weiter vorzugsweise von 5000 bis 20.000 g/mol auf.

Das polymere Amin der erfindungsgemäßen Streichfarbe und das erfindungsgemäße polymere Amin werden dabei z.B. durch ein Verfahren der radikalischen Polymerisation hergestellt, bei welchem Hydroxyalkylamin, Monoisopropanolamin, Ethanolamin, Diethanolamin, Triethanolamin, Dimethylaminoethylmethacrylat, Hydroxyethylmethacrylat, Polyglykolmethacrylat und/oder Mercaptopropionsäure mit einem Initiator zur Reaktion gebracht werden.

Geeignete und dem Fachmann bekannte Initiatoren sind wasserlösliche, nicht-sulfathaltige

Redoxsysteme. Gemäß einer Ausführungsform wird 2-2'-Azobis (2-amidinopropan)-hydrochlorid als Initiator eingesetzt. 2-2'-Azobis (2-amidinopropan)-hydrochlorid kann besonders präzise eingestellt werden, da es bei 56°C zerfällt und durch eine exakte Temperaturkontrolle definierte Polymerisationsbedingungen und eine konstante Menge an Initiator bereitgestellt werden können.

Das im Verfahren der radikalischen Polymerisation hergestellte polymere Amin der erfindungsgemäßen Streichfarbe und das erfindungsgemäße polymere Amin weisen eine Gaußsche Molekulargewichtsverteilung auf und ist derart einzustellen, dass das polymere Amin der erfindungsgemäßen Streichfarbe und das erfindungsgemäße polymere Amin eine Molekulargewichtsobergrenze von 20.000 g/mol nicht überschreiten. Bei höheren Molekulargewichten bilden sich Brücken zwischen den einzelnen Molekülen und es kann leicht zu Agglomeratbildungen und damit zu einem Flockungseffekt kommen.

In seiner einfachsten Ausführungsform wird das erfindungsgemäße polymere Amin durch die nachfolgende Formel II dargestellt.

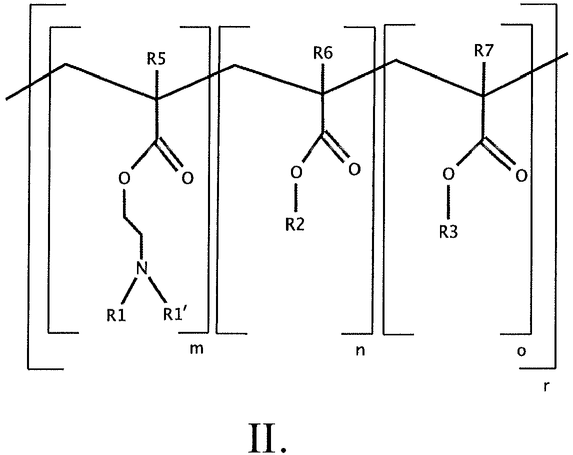

Hierbei sind die Kettenabschnitte n, m und/oder o jeweils unabhängig von einander eine Ethyleneinheit substituiert mit einer veresterten Carboxylgruppe vorzugweise in 1-3-Stellung; wobei die Kettenabschnitte n, m und/oder o jeweils unabhängig von einander in variabler Reihenfolge auftreten können;
m, n und/oder o jeweils unabhängig voneinander eine ganze Zahl ausgewählt aus der Gruppe 1, 2 und 3 sind;
die Kettenabschnitte n, m und/oder o jeweils unabhängig voneinander durch 0, 1, 2, 3, 4 oder 5 Ethyleneinheiten getrennt sind;
r eine ganze Zahl ausgewählt aus der Gruppe 1, 2, 3, 4, 5, 6, 7, 8, 9, 10, 11 und 12 ist;
R1 und R1' jeweils CH₃ sind;
R2 ausgewählt ist aus der Gruppe bestehend aus Hydroxyalkylgruppen, insbesondere CH₂OH, C₂H₄OH, C₃H₆OH, C₄H₈OH, C₅H₁₀OH, C₆H₁₂OH und para-C₆H₄OH; R3 ausgewählt ist aus der Gruppe (CH₂CH₂O)_{q}R4, wobei q eine ganze Zahl ausgewählt aus der Gruppe 10, 12, 14, 16, 18 und 20 ist, R4 ist C₂H₄OCH₃ und R5, R6 und R7 jeweils H ist.

Gemäß weiterer Ausführungsformen ist das Additiv der erfindungsgemäßen Streichfarbe und das erfindungsgemäße Additiv ausgewählt aus der Gruppe enthaltend das Copolymer Dimethylaminoethylmethacrylat-acetat-Hydroxyethyl-methacrylat und das Terpolymer Polyethylenoxidmethacrylat-Hydroxyethylmethacrylat-Dimethylaminoethylmethacrylatacetat.

Das erfindungsgemäße Additiv ist insbesondere geeignet als Zusatz zur Streichfarbe und ermöglicht es ebenso wie das in der Streichfarbe enthaltene neue Additiv, den Feststoffgehalt der Streichfarbe zu erhöhen und dennoch die rheologischen Anfordernisse moderner Coating-Technologien zu erfüllen. Das Additiv gemäß Anspruch 11 findet somit Verwendung als Zusatz für Streichfarben und insbesondere als Zusatz zu Polyvinylalkoholhaltigen und/oder Stärkebasierten Streichfarben.

Ohne durch die Theorie gebunden sein zu wollen, wird angenommen, dass die als Additive eingesetzten Amine aufgrund ihrer Nucleophilie, die höher ist und sein muss als die Nucleophilie der Carboxylatanionen, welche in die Streichfarbe eingearbeitet werden, in der Lage sind, die Wechselwirkungen der Carboxylatanionen mit freien Hydroxygruppen z.B. des Polyvinylalkohols oder der Stärke, die zu den unerwünschten Pigmentagglomeraten führen, zu unterbinden oder zu verhindern.

Dementsprechend konnte von den Erfindern gezeigt werden, dass die Amine gemäß der Erfindung in der Lage sind, in einer Lewis-Säure-Basewechselwirkung die reaktiven Hydroxyalkylgruppen, z.B. des Polyvinylalkholes (PVOH) zu blockieren. Dabei agiert PVOH als Elektronenakzeptor, das Amin als Elektronendonor. Es konnte weiterhin gezeigt werden, dass die Fließeigenschaften des PVOH's verbessert wurden und insbesondere auch der bekannte stabilitätsmindernde Effekt des PVOH's infolge Reaktion mit Carboxylatanionen in einer Streichfarbe reduziert wurde. Dabei führt die Zugabe von Aminen gemäß Anspruch 1 zu der erfindungsgemäßen Streichfarbe zu einer Blockierung der Reaktivität der Hydroxygruppe des PVOH's sowie zu einer verminderten Solvatation, wodurch es zu einer Erhöhung der in der Streichfarbe verfügbaren freien Wassermenge kommt. Aufgrund der Erhöhung der verfügbaren Menge freien Wassers, sinkt die Hochscherviskosität der Zusammensetzung und somit kann eine Streichfarbe mit erhöhtem bis zu sehr hohem Feststoffgehalt bereitgestellt werden.

Die erfindungsgemäße Streichfarbezeichnet sich weiterhin durch einen hohen Feststoffgehalt von z.B. wenigstens 70% aus. In weiteren Ausführungsformen konnte gezeigt werden, dass auch Feststoffgehalte von bis zu 80% erreicht werden können. Vorzugsweise enthält die erfindungsgemäße Zusammensetzung einen Feststoffgehalt von 70%-80%, 71%-78%, 72%-75%, 72%-80%, 72%-78%, 76%-80%, 74%-78%, 75%-80%, 74%-80%. Hierbei tragen im Wesentlichen die eingesetzten Pigmente zu dem geforderten Feststoffgehalt bei. Darüber hinaus tragen in geringem Maße auch Feststoffbestandteile der Binder bzw. Binderdispersion oder der Additive zu dem Gesamtfeststoffgehalt der Zusammensetzung bei.

Die erfindungsgemäße Streichfarbe weist trotz des hohen Feststoffgehaltes eine erstaunlich verbesserte Hochscherviskosität auf, welche z.B. bei 500000 s-1 mit einem ACAV-Kapillarviskosimeter bestimmt wurde und in der erfindungsgemäßen Farbe zwischen 7% und 20% niedriger liegt als bei Vergleichslösungen ohne das zusätzliche erfindungsgemäße Amin.

Gemäß weiterer Ausführungsformen weist die erfindungsgemäße Zusammensetzung eine Hochscherviskosität von zwischen 90 - 125 mPa·s bei einem Schergefälle von 5*10⁵ s⁻¹ (gemessen mit einem ACAV-Kapillarviskosimeter) auf, weiter vorzugsweise von zwischen 100 - 120 mPa·s bei einem Schergefälle von 5*10⁵ s⁻¹ (gemessen mit einem ACAV-Kapillarviskosimeter), weiter vorzugsweise von zwischen 105 - 120 mPa·s bei einem Schergefälle von 5*10⁵ s⁻¹ (gemessen mit einem ACAV-Kapillarviskosimeter) bzw. weiter vorzugsweise von zwischen 105 - 115 mPa·s bei einem Schergefälle von 5*10⁵ s⁻¹ (gemessen mit einem ACAV-Kapillarviskosimeter).

So weist beispielsweise die erfindungsgemäße Streichfarbe mit Feststoffgehalt von ca. 71% eine Hochscherviskosität von zwischen höchstens 100 - 120 mPa·s bei einem Schergefälle von 5*10⁵ s⁻¹ auf. Auch bei Feststoffgehalten von ca. 72% bis ca. 73% zeigt die erfindungsgemäße Streichfarbe beispielsweise nur Hochscherviskosität von zwischen 110-120 mPa·s bei einem Schergefälle von 5*10⁵ s⁻¹ (gemessen mit einem ACAV-Kapillarviskosimeter) und ist damit herkömmlichen Streichfarben (bei vergleichbarer Zusammensetzung) mit Hochscherviskositäten von zwischen 145 - 190 mPa·s bei einem Schergefälle von 5*10⁵ s⁻¹ deutlich überlegen.

Die erfindungsgemäße Streichfarbe wird weiterhin über den sogenannten Verlustfaktor charakterisiert. Hierbei definiert sich der Verlustfaktor tan δ = G" geteilt durch G', wobei G" = plastischer Fließanteil und G' = elastischer Fließanteil ist. Je höher der Verlustfaktor liegt, desto mehr nähert sich das Fließverhalten demjenigen einer Newton'schen Flüssigkeit wie z.B. Wasser an. Die Verarbeitungseigenschaften bei hoher Prozessgeschwindigkeit verbessern sich deshalb mit zunehmendem Verlustfaktor.

Die erfindungsgemäße Streichfarbe hat gemäß weiterer Ausführungsbeispiele einen Verlustfaktor von 0,90 und größer, vorzugsweise 1,10 bis 1,25, weiter vorzugsweise von 1,20 bis 1,45, weiter vorzugsweise von 1,25 bis 1,55, weiter vorzugsweise von 1,30 bis 1,65.

Die in der erfindungsgemäßen Streichfarbe eingesetzten Pigmente sind ausgewählt aus der Gruppe enthaltend Kaolin (eng. clay), natürliches Calziumcarbonat (engl. Ground Calcium Carbonat = GCC), präzipitiertes Calziumcarbonat (eng. Precipitated Calcium Carbonat = PCC), Talkum, Calziumsulfat, Titandioxid, Aluminiumtrihydrate, Bariumsulfat, synthetische Pigmente und Mischungen derselben. Vorzugsweise sind die eingesetzten Partikel weitgehend frei von Verunreinigungen, weisen vorzugsweise eine gleichmäßige Partikelgröße und -verteilung und gute Löslichkeit auf.

Die in der erfindungsgemäßen Streichfarbe eingesetzten Binder und/oder Cobinder sind ausgewählt aus der Gruppe enthaltend Polyvinylalkohollösung, Polyvinylesterdispersionen, Polyacrylatemulsionen, Polyethylenglycole, Stärke, Carboxymethylcellulose (CMC), StyrolButadien, Gelatine, Casein, Hydroxyethylcellulose, Casein, Proteine, Alginate, Cellulosederivate, Acrylsäureester-Styrol, Acrylsäureester-Vinylacetat, Mischpolymerisate obiger Ausgangsprodukte mit Acrylnitril, Vinylacetat mit geringen Anteilen von Copolymeren, Vinylacetat-Ethylen und Mischungen derselben.

Darüber hinaus enthält die erfindungsgemäße Streichfarbe, optional, dem Fachmann bekannte Additive ausgewählt aus der Gruppe enthaltend Dispergiermittel oder Dispergierhilfsmittel, Weichmacher, Verdickungsmittel, Entlüfter, Entschäumer, optische Aufheller, pH-Regulatoren, Biozide oder Ähnliches.

Die erfindungsgemäße Streichfarbe kann gemäß dem nachfolgend beschriebenen Verfahren hergestellt werden. Hierbei kann es vorteilhaft sein, in einem ersten Arbeitsschritt im saueren Milieu eine niederviskose Polymerdispersion des erfindungsgemäßen Amins herzustellen und diese dann mit den hydroxygruppenhaltigen Zusätzen, wie z.B. Polyvinylalkohol oder Stärke zu mischen. Die reaktiven Hydroxygruppen werden dabei sozusagen im Vorfeld blockiert und stehen somit nicht mehr zur unerwünschten Agglomeratbildung zur Verfügung.

Das erfindungsgemäße Additiv kann aber auch zu bestehenden oder vorgemischten Streichfarben zugegeben und/oder in diese eingerührt werden, um deren rheologischen Eigenschaften zu verbessern.

Weitere Vorteile und Anwendungsmöglichkeiten der vorliegenden Erfindung werden nachfolgend anhand von Ausführungsbeispielen mit Bezug auf die Tabellen dargestellt.

Die Ausführungsbeispiele sind nicht als Einschränkung der Erfindung zu verstehen. Vielmehr sind im Rahmen der Beschreibung der Ausführungsbeispiele auch solche Varianten, Elemente und Kombinationen als offenbart anzusehen, die sich durch eine Kombination oder Abwandlung von einzelnen, in der allgemeinen Beschreibung, den Ausführungsbeispielen, den Ansprüchen oder den Zeichnungen enthaltenen Merkmalen ergeben, und diese Merkmalskombinationen oder Abwandlungen nicht ausdrücklich in einem Ausführungsbeispiel gezeigt bzw. beschrieben sind und gegebenenfalls zu einem geänderten Gegenstand oder zu neuen Verfahrensschritten bzw. einer neuen Abfolge von Verfahrensschritten führen.

### Beispiele:

### I. Aufbereitung und Herstellung geeigneter polymerer Amine

### 1.1. Herstellung eines polymeren Amins:

In einen Mehrhalskolben werden 751.1 ml demineralisiertes (dem.) Wasser vorgelegt. Anschließend werden unter Rühren 90g Dimethylaminoethylmethacrylat (Hersteller Evonik) sowie 34.5g 99%ige Essigsäure zugesetzt. 10g Isopropanol werden als Kettenregler eintragen. Eine Mischung von 33.75g Hydroxyethylmethacrylat, 23.5g Polyglykolmethacrylat, Polyether Kettenlänge 750 Dalton und 0.75g 3-Mercaptopropionsäure, wird unter Rühren während 30 min zugetropft. Gleichzeitig wird eine Lösung von 2-2'-Azobis (2-amidinopropan)-hydrochlorid ebenfalls während ca. 30 min zugetropft. Die Reaktionsmischung wird bei 70°C ca. 4 h gerührt und dann abgekühlt.

Es entsteht eine niederviskose, 25%ige Polymerlösung mit einer Brookfieldviskosität von 100 bis 150 mPa·s.

### 1.2: Herstellung eines weiteren polymeren Amins:

Zu 400 g Polymerlösung aus Beispiel 1 werden 44.4g 99%ige Essigsäure zugegeben. Anschließend werden 55.6 g Monoisopropanolamin langsam unter Rühren zugegeben.

Es entsteht eine dünnflüssige Lösung mit einem Trockengehalt von 40%- und einer Viskosität von etwa 150 mPa·s Brookfield 100 Upm.

### 1.3: Herstellung eines weiteren polymeren Amins:

In einem Mehrhalskolben werden 140 ml dem. Wasser vorgelegt. Anschließend werden 44.9 g Polyvinylalkohol (PVOH) 5-88 mit einem Hydrolysegrad von 88% und einer Viskosität von 5.5 ± 1 mPa·s (4%ige Lösung) zugegeben und unter Rühren bei 90°C gelöst. Nach dem Abkühlen auf 70°C werden separat 14g Hydroxyethylmethacrylat sowie 0.1 g 2-2'Azobis(2-amidinopropan)hydrochlorid gelöst in 10 ml dem. Wasser während 30 min zugetropft. Die Mischung wird 180 min bei 70°C unter Rühren polymerisiert.
Es entsteht eine viskose farblose 25%ige Dispersion.

### 1.4: Herstellung eines weiteren polymeren Amins:

In einem Rührbehälter werden 563 ml dem. Wasser vorgelegt, anschließend werden unter Rühren 50g 99%ige Essigsäure, sowie 37.5 g Monoisopropanolamin zugesetzt. 182.5 g PVOH 5-88 werden anschließend zugesetzt und der PVOH durch längeres Rühren bei ca. 70°C in Lösung gebracht.

Es wird eine klare, viskose 30%ige-Lösung erhalten.

### 1.5: Herstellung eines weiteren polymeren Amins:

250 ml PVOH-Lösung entsprechend Beispiel 2 sowie 250 ml Polymerlösung entsprechend Beispiel 1 werden unter Rühren in einem Becherglas gemischt.

Es entsteht eine klare, viskose Lösung mit einem Feststoffgehalt von ca. 27 bis 28% und einer Viskosität von 780 MPAS.

### II. Viskositätsuntersuchungen in hochfeststoffhaltigen Streichfarbenrezepturen

Die Additive hergestellt wie gemäß Beispiel 1.1 bis 1.5 erläutert, wurden in einer hochfeststoffhaltigen Streichfarbenrezeptur auf ihren Einfluss auf die Nieder- und Hochscherviskosität der Streichfarben untersucht.

Die Niederscherviskosität wurde mittels eines Brookfieldrotationsviskosimeters bei 20 und 100 Upm gemessen, die Viskosität bei 30000 s⁻¹ mit einem Paar MCR-Rotationsviskosimeter im Platte/Plattemodus, sowie bei 500000 s⁻¹ mit einem ACAV-Kapillarviskosimeter.

Für die nachfolgend beschriebenen Rezepturen wurde eingesetzt:

| | |
|---|---|
| Hydrocarb 90 | natürliches gemahlenes Calciumcarbonat GCC Korngröße 90% < 2µm |
| Hydrocarb 60 | GCC Korngröße 60% < 2µm |
| Amazon 88 | Feinstkaolin, Korngröße 98% < 2 µm |
| Niklazell | carboxymethylierte Zellulose |
| SB-Latex | Styrol Butadien Latex |
| PVOH 5-98 | Polyvinylalkohol, Viskosität 4%ige Lösung, 5.5 ±1 mPa·s Verseifungsgrad 98% |

**Versuchsrezepturen Tabelle 1:**

| | Kontrolle | Rezeptur1 | Rezeptur2 | Rezeptur3 |
|---|---|---|---|---|
| Hydrocarb 60 | 4 | 4 | 4 | 4 |
| Hydrocarb 90 | 87 | 87 | 87 | 87 |
| Amazon 88 | 9 | 9 | 9 | 9 |
| Niklazell | 0,2 | 0,2 | 0,2 | 0,2 |
| SB-Latex | 6,0 | 6,0 | 6,0 | 6,0 |
| PVOH 5-98 | 1,25 | 1,25 | 1,25 | 1,25 |
| Amin aus 1.3 | | 0,7 | | |
| Amin aus 1.4 | | | 0,7 | |
| Amin aus 1.1 | | | | 0,7 |
| Feststoffgehalt% | 71,2 | 71,4 | 71,0 | 71,3 |

**Ergebnisse:**

| | | | | |
|---|---|---|---|---|
| η/20/min mPa·s | 6340 | 7620 | 6640 | 9880 |
| η/100/min mPa·s | 1920 | 2160 | 2020 | 2880 |
| η3*10⁴ s⁻¹ mPa·s | 81.9 | 103 | 87.3 | 112 |
| η5*10⁵ s⁻¹ mPa·s | 127.4 | 110.7 | 103.1 | 120.2 |

Mit den getesteten Rezepturen konnten deutliche Verbesserungen der Hochscherviskosität erzielt werden. So zeigen die Rezepturen 1 bis 3 bei einem Festmengengehalt von ca. 71% bis 71,5% eine Hochscherviskosität von 103.1 - 120.2 mPa·s bei einem Schergefälle von 5*10⁵s⁻¹ auf.

**Versuchsrezepturen Tabelle 2**

| | Kont. | Kont. | Rezeptur4 | Rezeptur5 | Rezeptur6 |
|---|---|---|---|---|---|
| Hydrocarb 90 | 87 | 96 | 96 | 96 | 96 |
| Hydrocarb 60 | 4 | 4 | 4 | 4 | 4 |
| Amazon 88 | 9 | | | | |
| CMC Niklacell CH-5 | 0,2 | 0,2 | 0,2 | 0,2 | 0,2 |
| SB-Latex | 6,0 | 6,0 | 6,0 | 6,0 | 6,0 |
| Ca-Stearat | 0,25 | 0,25 | 0,25 | 0,25 | |
| Optischer Aufheller | 0,35 | 0,35 | 0,35 | 0,35 | |
| PVOH 5-98 | 1,25 | 1,25 | 0,95 | 0,75 | 0,75 |
| Amin aus 1.1 | | | 0,3 | | |
| Amin aus 1.3 / 1.4 | | | | 0,25/0,25 | |
| Amin aus 1.2 / 1.3 | | | | | 0,5 |
| Feststoffgehalt % | 71,1 | 72,9 | 72,6 | 72,8 | 72,9 |

**Ergebnisse:**

| | | | | | |
|---|---|---|---|---|---|
| η/20/min mPa·s | 7160 | 9360 | 10280 | 8120 | 8140 |
| η/100/min mPa·s | 1980 | 2852 | 2560 | 2400 | 2260 |
| η 3*10⁴ s⁻¹ mPa·s | 81.2 | 135 | 110 | 96.3 | 95.8 |
| η 5*10⁵ s⁻¹ mPa·s | 142.1 | 186.6 | 119 | 113.7 | 105.7 |
| Verlustfaktor | 1.35 | 0.88 | 0.95 | 1.28 | 1.53 |

Auch mit den getesteten weiteren Rezepturen konnten deutliche Verbesserungen der Hochscherviskosität erzielt werden. So zeigen die Rezepturen 4 bis 6 bei einem Festmengengehalt von ca. 72% bis 73% eine Hochscherviskosität von 105 bis 119 mPa·s bei einem Schergefälle von 5*10⁵ s⁻¹ auf.

Weiterhin konnte anhand der Verlustfaktoren (Verlustfaktor: tan δ = G" geteilt durch G', wobei G" = plastischer Fließanteil und G' = elastischer Fließanteil) gezeigt werden, dass deutlich erhöhte Prozessgeschwindigkeiten mit den erfindungsgemäßen Rezepturen möglich wurden, denn je höher der Verlustfaktor desto besser sind die Verarbeitungseigenschaften bei hohen Schergefällen, d.h. hoher Prozessgeschwindigkeit.

## Patentansprüche

1. Streichfarbe enthaltend Pigment, Binder, polymeres Amin, Additive und Wasser, **dadurch gekennzeichnet, dass** das polymeres Amin die allgemeinen Formel I hat 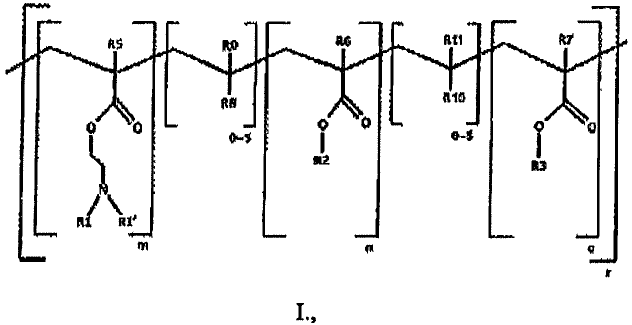
wobei die Kettenabschnitte n, m und/oder o jeweils unabhängig voneinander eine Ethyleneinheit substituiert mit einer veresterten Carboxylgruppe vorzugweise in 1-3-Stellung sind;
wobei die Kettenabschnitte n, m und/oder o jeweils unabhängig voneinander in variabler Reihenfolge auftreten können;
m und/oder n jeweils unabhängig voneinander eine ganze Zahl ausgewählt aus der Gruppe 1, 2 und 3 sind;
o eine ganze Zahl ausgewählt aus der Gruppe 0, 1, 2 und 3 ist;
die Kettenabschnitte n, m und/oder o jeweils unabhängig von einander durch 0, 1, 2, 3, 4 oder 5 Ethyleneinheiten getrennt sind;
r eine ganze Zahl ausgewählt aus der Gruppe 1, 2, 3, 4, 5, 6, 7, 8, 9, 10, 11 und 12 ist;
R1 und R1' jeweils unabhängig voneinander ausgewählt sind aus der Gruppe bestehend aus H, Alkylresten, zyklische Alkylresten und Arylresten, insbesondere CH₃, C₂H₅, C₃H₇, C₄H₉, C₅H₁₁ und C₆H₅;
R2 ausgewählt ist aus der Gruppe bestehend aus Hydroxyalkylgruppen, insbesondere CH₂OH, C₂H₄OH, C₃H₆OH, C₄H₈OH, C₅H₁₀OH, C₆H₁₂OH und para-C₆H₄OH;
R3 ausgewählt ist aus der Gruppe (CH₂CH₂O)_{q}R4, wobei q eine ganze Zahl ausgewählt aus der Gruppe 1 bis 40 ist;
R4 ausgewählt sind aus der Gruppe bestehend aus H, Alkylresten, zyklische Alkyresten, Estern und Arylresten, insbesondere CH₃, C₂H₅, C₃H₇, C₂H₄OCH₃, C₄H₉, C₅H₁₁ und C₆H₅;
R5, R6 und R7 jeweils unabhängig voneinander ausgewählt sind aus der Gruppe bestehend aus H und CH₃;
R8 und R10 jeweils unabhängig voneinander ausgewählt sind aus der Gruppe bestehend aus H, CH₃; und
R9 und R11 jeweils unabhängig voneinander ausgewählt sind aus der Gruppe bestehend aus H, CH₃, CH₂CHCOOH, Acrylat, Vinylreste, CH₂CH₃, aromatische Phenylreste und Styrol C₈H₈.

2. Streichfarbe gemäß Anspruch 1 charakterisiert dadurch, dass das Amin mit einem durchschnittlichen Molekulargewicht von 300 bis 20.000 g/mol vorliegt.

3. Streichfarbe gemäß Anspruch 1 oder 2 ausgewählt aus der Gruppe enthaltend das Copolymer Dimethylaminoethylmethacrylatacetat-Hydroxyethylmethacrylat und das Terpolymer Polyethylenoxidmethacrylat-Hydroxyethylmethacrylat-Dimethylaminoethylmethacrylatacetat.

4. Streichfarbe gemäß Anspruch 1 bis 3 **dadurch gekennzeichnet, dass** die Streichfarbe einen Feststoffgehalt von 70% bis 80% aufweist.

5. Streichfarbe gemäß Anspruch 1 bis 4 **dadurch gekennzeichnet, dass** das eingesetzte Pigment ausgewählt ist aus der Gruppe enthaltend Kaolin, natürliches Calziumcarbonat (GCC), präzipitiertes Calziumcarbonat (PCC), Talkum, Calziumsulfat, Titandioxid, Aluminiumtrihydrate, synthetische Pigmente oder Mischungen derselben.

6. Streichfarbe gemäß Anspruch 1 bis 5 **dadurch gekennzeichnet, dass** der eingesetzte und zusätzliche Binder und/oder Cobinder ausgewählt sind aus der Gruppe enthaltend Polyvinylalkoholdispersionen, Polyvinylesterdispersionen, Polyacrylatemulsionen, Polyethylenglycole, Stärke, Gelatine, Casein, Hydroxyethylcellulose, Casein, Proteine, Alginate, Cellulosederivate, Acrylsäureester-Styrol, Acrylsäureester-Vinylacetat, Mischpolymerisate obiger Ausgangsprodukte mit Acrylnitril, Vinylacetat mit geringen Anteilen von Copolymeren, Vinylacetat-Ethylen und Mischungen derselben.

7. Streichfarbe gemäß Anspruch 1 bis 6 **dadurch gekennzeichnet, dass** zusätzlich ein oder mehrere eingesetzte Additive zugegeben werden, welche ausgewählt sind aus der Gruppe enthaltend Dispergiermittel oder Dispergierhilfsmittel, Weichmacher, Verdickungsmittel, Entlüfter, Entschäumer, optische Aufheller, pH-Regulatoren, Biozide und Mischungen derselben.

8. Streichfarbe gemäß Anspruch 1 bis 7 **dadurch gekennzeichnet, dass** die Streichfarbe eine Hochscherviskosität von zwischen 90 und 125 mPa·s bei einem Schergefälle von 5*10⁵ s⁻¹ gemessen mit einem ACAV-Kapillarviskosimeter aufweist.

9. Streichfarbe gemäß Anspruch 1 bis 8 **dadurch gekennzeichnet, dass** die Streichfarbe in einen pH Bereich zwischen 7,0 und 10,5 vorliegt.

10. Verwendung der Streichfarbe gemäß einem der Ansprüche 1 bis 9 zur Beschichtung von Trägermaterialien aus Papier oder Kartonagen.

11. Polymeres Amin der allgemeinen Formel II 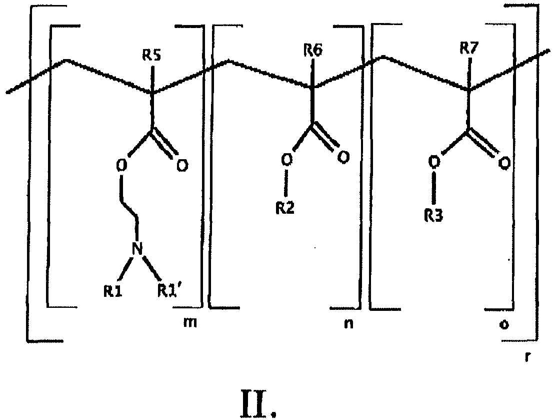
wobei die Kettenabschnitte n, m und/oder o jeweils unabhängig voneinander eine Ethyleneinheit substituiert mit einer veresterten Carboxylgruppe vorzugweise in 1-3-Stellung sind;
wobei die Kettenabschnitte n, m und/oder o jeweils unabhängig voneinander in variabler Reihenfolge auftreten können;
m, n und/oder o jeweils unabhängig voneinander eine ganze Zahl ausgewählt aus der Gruppe 1, 2 und 3 sind;
die Kettenabschnitte n, m und/oder o jeweils unabhängig voneinander durch 0, 1, 2, 3, 4 oder 5 Ethyleneinheiten getrennt sind;
r eine ganze Zahl ausgewählt aus der Gruppe 1, 2, 3, 4, 5, 6, 7, 8, 9, 10, 11 und 12 ist;
R1 und R1' jeweils CH₃ sind;
R2 ausgewählt ist aus der Gruppe bestehend aus Hydroxyalkylgruppen, insbesondere CH₂OH, C₂H₄OH, C₃H₆OH, C₄H₈OH, C₅H₁₀OH, C₆H₁₂OH und para-C₆H₄OH;
R3 ausgewählt ist aus der Gruppe (CH₂CH₂O)_{q}R4, wobei q eine ganze Zahl ausgewählt aus der Gruppe 10, 12, 14, 16, 18 und 20 ist, R4 ist C₂H₄OCH₃ und R5, R6 und R7 jeweils H ist.

12. Amin gemäß Anspruch 11 charakterisiert dadurch, dass das Amin mit einem durchschnittlichen Molekulargewicht von 300 bis 20.000 g/mol vorliegt.

13. Amin gemäß Anspruch 11 oder 12 ausgewählt aus der Gruppe enthaltend das Copolymer Dimethylaminoethylmethacrylatacetat-Hydroxyethylmethacrylat und das Terpolymer Polyethylenoxidmethacrylat-Hydroxyethylmethacrylat-Dimethylaminoethylmethacrylatacetat.

14. Verfahren der radikalischen Polymerisation zur Herstellung des Amins gemäß einem der Ansprüche 11 bis 13, wobei Substanzen aus der Gruppe bestehend aus Hydroxyalkylamin, Monoisopropanolamin, Ethanolamin, Diethanolamin, Triethanolamin, Dimethylaminoethylmethacrylat, Hydroxyethylmethacrylat, Polyglykolmethacrylat und Mercaptopropionsäure sowie Mischungen derselben mit einem wasserlöslichen, nicht-sulfathaltigen Initiator zur Reaktion gebracht werden.

15. Verfahren der radikalischen Polymerisation gemäß Anspruch 14, wobei der Initiator 2-2'-Azobis (2-amidinopropan)-hydrochlorid ist.

16. Verwendung des Amins gemäß einem der Ansprüche 11 bis 13 als Additive zur Herstellung von Streichfärben.

## Claims

1. A coating colour comprising pigment, binder, polymeric amine, additives and water, **characterized in that** the polymeric amine has the general formula I 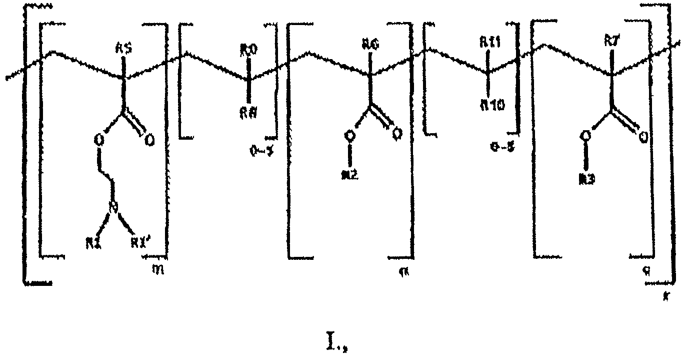
wherein the chain segments n, m and/or o are each, independently of one another, an ethylene unit substituted by an esterified carboxyl group, preferably in a 1-3 position;
wherein the chain segments n, m and/or o may each occur, independently of one another, in variable order;
m and/or n are each, independently of one another, an integer selected from the group of 1, 2 and 3;
o is an integer selected from the group of 0,1, 2 and 3;
the chain segments n, m and/or o are each separated, independently of one another, by 0, 1, 2, 3, 4 or 5 ethylene units;
r is an integer selected from the group of 1, 2, 3, 4, 5, 6, 7, 8, 9, 10, 11 and 12;
R1 and R1' are each selected, independently of one another, from the group consisting of H, alkyl residues, cyclic alkyl residues and aryl residues, particularly CH₃, C₂H₅, C₃H₇, C₄H₉, C₅H₁₁ and C₆H₅;
R2 is selected from the group consisting of hydroxy alkyl groups, particularly CH₂OH, C₂H₄OH, C₃H₆, OH, C₄H₈OH, C₅H₁₀OH, C₆H₁₂OH and para-C₆H₄OH;
R3 is selected from the group of (CH₂CH₂O)_{q}R4, wherein q is an integer selected from the group of 1 to 40;
R4 are selected from the group consisting of H, alkyl residues, cyclic alkyl residues, esters and aryl residues, particularly CH₃, C₂H₅, C₃H₇, C₂H₄OCH₃, C₄H₉, C₅H₁₁ and C₆H₅;
R5, R6 and R7 are each selected, independently of one another, from the group consisting of H and CH₃;
R8 and R10 are each selected, independently of one another, from the group consisting of H, CH₃; and
R9 and R11 are each selected, independently of one another, from the group consisting of H, CH₃, CH₂CHCOOH, acrylate, vinyl residues, CH₂CH₃, aromatic phenyl residues and styrene C₈H₈.

2. The coating colour according to claim 1, **characterized in that** the amine is present in an average molecular weight of 300 to 20,000 g/mol.

3. The coating colour according to claim 1 or 2, selected from the group comprising the copolymer dimethylaminoethyl methacrylate acetate hydroxyethyl methacrylate and the terpolymer polyethylene oxide methacrylate hydroxyethyl methacrylate dimethylaminoethyl methacrylate acetate.

4. The coating colour according to claims 1 to 3, **characterized in that** the coating colour has a solids content of 70% to 80%.

5. The coating colour according to claims 1 to 4, **characterized in that** the pigment employed is selected from the group comprising kaolin, natural calcium carbonate (GCC), precipitated calcium carbonate (PCC), talcum, calcium sulfate, titanium dioxide, aluminium trihydrate, synthetic pigments, or mixtures thereof.

6. The coating colour according to claims 1 to 5, **characterized in that** the employed and additional binders and/or cobinders are selected from the group comprising polyvinyl alcohol dispersions, polyvinyl ester dispersions, polyacrylate emulsions, polyethylene glycols, starch, gelatin, casein, hydroxyethyl cellulose, casein, proteins, alginates, cellulose derivatives, acrylic-acid ester styrene, acrylic-acid ester vinyl acetate, copolymerisates of the above starting products with acrylic nitrile, vinyl acetate containing small proportions of copolymers, vinyl acetate ethylene, and mixtures thereof.

7. The coating colour according to claims 1 to 6, **characterized in that** one or more additives are additionally employed which are selected from the group comprising dispersants or dispersing aids, softeners, thickeners, deaerators, defoamers, optical brighteners, pH regulators, biocides, and mixtures thereof.

8. The coating colour according to claims 1 to 7, **characterized in that** the coating colour has a high shear viscosity of between 90 and 125 mPa·s at a shear rate of 5*10⁵ s⁻¹ as measured by an ACAV capillary viscometer.

9. The coating colour according to claims 1 to 8, **characterized in that** the coating colour is present in a pH range between 7.0 and 10.5.

10. The use of the coating colour according to any of claims 1 to 9 for coating carrier materials made of paper or cardboard articles.

11. A polymeric amine of the general formula II 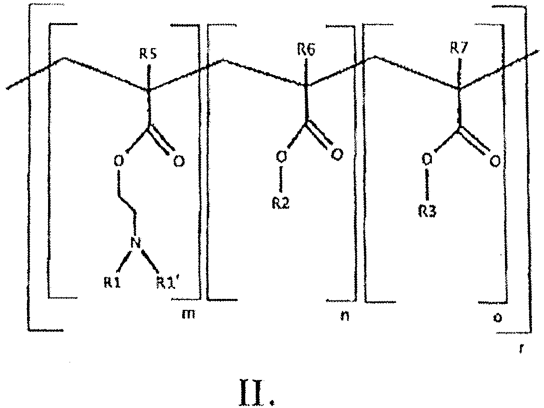
wherein the chain segments n, m and/or o are each, independently of one another, an ethylene unit substituted by an esterified carboxyl group, preferably in a 1-3 position;
wherein the chain segments n, m and/or o may each occur, independently of one another, in variable order;
m, n and/or o are each, independently of one another, an integer selected from the group of 1, 2 and 3;
the chain segments n, m and/or o are each separated, independently of one another, by 0, 1, 2, 3, 4 or 5 ethylene units;
r is an integer selected from the group of 1, 2, 3, 4, 5, 6, 7, 8,9,10,11 and 12;
R1 and R1' each are CH₃;
R2 is selected from the group consisting of hydroxy alkyl groups, particularly CH₂OH, C₂H₄OH, C₃H₆, OH, C₄H₈OH, C₅H₁₀OH, C₆H₁₂OH and para-C₆H₄OH;
R3 is selected from the group of (CH₂CH₂O)_{q}R4, wherein q is an integer selected from the group of 10, 12, 14, 16, 18 and 20, R4 is C₂H₄OCH₃, and R5, R6 and R7 each are H.

12. The amine according to claim 11, **characterized in that** the amine is present in an average molecular weight of 300 to 20,000 g/mol.

13. The amine according to claim 11 or 12, selected from the group comprising the copolymer dimethylaminoethyl methacrylate acetate hydroxyethyl methacrylate and the terpolymer polyethylene oxide methacrylate hydroxyethyl methacrylate dimethylaminoethyl methacrylate acetate.

14. A method of radical polymerization for producing the amine according to any of claims 11 to 13, wherein substances from the group consisting of hydroxyalkylamine, monoisopropanolamine, ethanolamine, diethanolamine, triethanolamine, dimethylaminoethyl methacrylate, hydroxyethyl methacrylate, polyglycol methacrylate and mercaptopropionic acid as well as mixtures thereof are reacted with a water-soluble, non-sulfate-containing initiator.

15. The method of radical polymerization according to claim 14, wherein the initiator is 2-2'-Azobis (2-amidinopropane) hydrochloride.

16. The use of the amine according to any of claims 11 to 13 as additives for producing coating colours.

## Revendications

1. Coucheuse contenant du pigment, de l'émulsion, de l'amine polymère, des additifs et de l'eau, **caractérisée en ce que** l'amine polymère possède la formule I 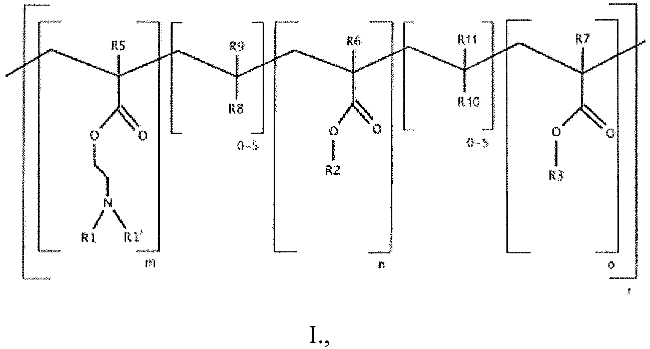
les segments de chaîne n, m et/ou o étant respectivement indépendamment les uns des autres une unité d'éthylène substituée avec un groupe carboxylique estérifié de préférence en position 1-3 ;
les segments de chaîne n, m et/ou o pouvant survenir respectivement indépendamment les uns des autres par ordre variable ;
m et/ou n sont respectivement indépendamment l'un de l'autre un nombre entier sélectionné à partir des groupes 1, 2 et 3 ;
o est un nombre entier sélectionné à partir des groupes 0, 1, 2 et 3 ;
les segments de chaîne n, m et/ou o sont respectivement les uns des autres séparés par 0, 1, 2, 3, 4 ou 5 unités d'éthylène ;
r est un nombre entier sélectionné à partir des groupes 1, 2, 3, 4, 5, 6, 7, 8, 9, 10, 11 et 12 ;
R1 et R1' sont sélectionnés respectivement indépendamment l'un de l'autre à partir du groupe se composant du H, de restes d'alkyle, de restes d'alkyle cycliques et de restes d'aryle, notamment du CH₃, du C₂H₅, du C₃H₇, du C₄H₉, du C₅H₁₁ et du C₆H₅ ; R2 est sélectionné à partir du groupe se composant des groupes d'hydroxyalkyle, notamment du CH₂OH, du C₂H₄OH, du C₃H₆OH, du C₄H₈OH, du C₅H₁₀OH, du C₆H₁₂OH et du para-C₆H₄OH ;
R3 est sélectionné à partir du groupe (CH₂CH₂O)_{q}R4, q étant un nombre entier sélectionné à partir du groupe 1 à 40 ;
R4 est sélectionné à partir du groupe se composant du H, de restes d'alkyle, de restes d'alkyle cycliques, d'esters et de restes d'aryle, notamment du CH₃, du C₂H₅, du C₃H₇, du C₂H₄OCH₃, du C₄H₉, du C₅H₁₁ et du C₆H₅ ;
R5, R6 et R7 sont sélectionnés respectivement indépendamment les uns des autres à partir du groupe se composant du H et du CH₃ ;
R8 et R10 sont sélectionnés respectivement indépendamment les uns des autres à partir du groupe se composant du H, du CH₃ ; et
R9 et R11 sont sélectionnés respectivement indépendamment les uns des autres à partir du groupe se composant du H, du CH₃, du CH₂CHCOOH, de l'acrylate, de restes de vinyle, du CH₂CH₃, de restes de phényle aromatiques et de styrène C₈H₈.

2. Coucheuse selon la revendication 1, **caractérisée en ce que** l'amine est présente avec un poids moléculaire moyen de 300 à 20.000 g/mole.

3. Coucheuse selon les revendications 1 ou 2, sélectionnée à partir du groupe contenant le copolymère de diméthylaminoéthylméthacrylatacétate-hydroxyéthylméthacrylate et le terpolymère de polyéthylènoxydeméthacrylate-hydroxyéthylméthacrylate-diméthylaminoéthylméthacrylatacétate.

4. Coucheuse selon les revendications 1 à 3, **caractérisée en ce que** la coucheuse présente une teneur en matières solides de 70 % à 80 %.

5. Coucheuse selon les revendications 1 à 4, **caractérisée en ce que** le pigment mis en oeuvre est sélectionné à partir du groupe contenant du kaolin, du carbonate de calcium naturel (GCC), du carbonate de calcium précipité (PCC), du talc, du sulfate de calcium, du dioxyde de titane, du trihydrate d'aluminium, des pigments synthétiques ou des mélanges de ceux-ci.

6. Coucheuse selon les revendications 1 à 5, **caractérisée en ce que** l'émulsion et/ou la coémulsion mise en oeuvre et supplémentaire sont sélectionnées à partir du groupe contenant des dispersions d'alcool de polyvinyle, des dispersions d'ester de polyvinyle, des émulsions de polyacrylate, des glycols de polyéthylène, de l'amidon, de la gélatine, de la caséine, de la cellulose hydroxyéthylique, de la caséine, des protéines, des alginates, des dérivés de cellulose, du styrène d'acrylate, de l'acétate vinylique d'acrylate, des copolymères des produits initiaux ci-dessus avec du nitrile acrylique, de l'acétate vinylique avec de faibles proportions de copolymères, de l'éthylène d'acétate vinylique et des mélanges de ceux-ci.

7. Coucheuse selon les revendications 1 à 6, **caractérisée en ce que**, par ailleurs un ou plusieurs additifs mis en oeuvre sont ajoutés, qui sont sélectionnés à partir du groupe contenant de l'agent dispersant ou de l'expédient dispersant, du plastifiant, de l'épaississant, du désaérant, de l'antimousse, des agents de blanchiment optique, des régulateurs de pH, des biocides et des mélanges de ceux-ci.

8. Coucheuse selon les revendications 1 à 8, **caractérisée en ce que** la coucheuse présente une viscosité à cisaillement élevée comprise entre 90 et 125 mPa·s à un gradient de cisaillement de 5*10⁵ s⁻¹ mesuré avec un viscosimètre à tube capillaire ACAV.

9. Coucheuse selon les revendications 1 à 8, **caractérisée en ce que** la coucheuse est présente dans une zone de pH comprise entre 7,0 et 10,5.

10. Utilisation de la coucheuse selon une quelconque des revendications 1 à 9, en vue du revêtement de matériaux de support en papier ou en cartonnages.

11. Amine polymère de la formule générale II 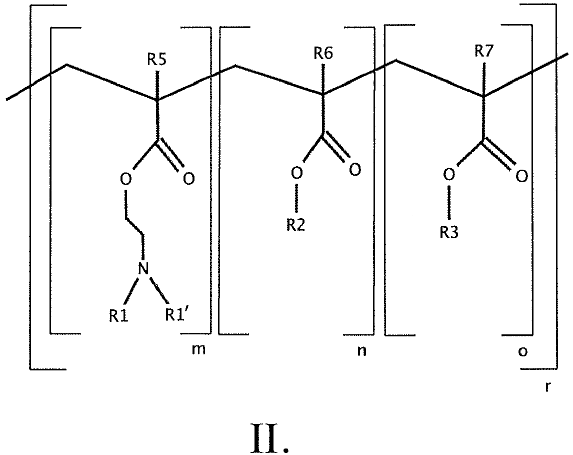
les segments de chaîne n, m et/ou o étant respectivement indépendamment les uns des autres une unité d'éthylène substituée avec un groupe carboxylique estérifié de préférence en position 1-3 ;
les segments de chaîne n, m et/ou o pouvant survenir respectivement indépendamment les uns des autres par ordre variable ;
m, n et/ou o sont respectivement indépendamment les uns des autres un nombre entier sélectionné à partir des groupes 1, 2 et 3 ;
les segments de chaîne n, m et/ou o sont respectivement indépendamment les uns des autres séparés par 0, 1, 2, 3, 4 ou 5 unités d'éthylène ;
r est un nombre entier sélectionné à partir des groupes 1, 2, 3, 4, 5, 6, 7, 8, 9, 10, 11 et 12 ;
R1 et R1' sont respectivement du CH₃ ;
R2 est sélectionné à partir du groupe se composant des groupes d'hydroxyalkyle, notamment du CH₂OH, du C₂H₄OH, du C₃H₆OH, du C₄H₈OH, du C₅H₁₀OH, du C₆H₁₂OH et du para-C₆H₄OH ;
R3 est sélectionné à partir du groupe (CH₂CH₂O)_{q}R4, q étant un nombre entier sélectionné à partir des groupes 10, 12, 14, 16, 18 et 20, R4 étant du C₂H₄OCH₃ et R5, R6 et R7 étant respectivement du H.

12. Amine selon la revendication 11, **caractérisée en ce que** l'amine est présente avec un poids moléculaire moyen de 300 à 20.000 g/mole.

13. Amine selon les revendications 11 ou 12, sélectionnée à partir du groupe contenant le copolymère de diméthylaminoéthylméthacrylatacétate-hydroxyéthylméthacrylate et le terpolymère de polyéthylènoxydeméthacrylate-hydroxyéthylméthacrylate-diméthylaminoéthylméthacrylatacétate.

14. Procédé de la polymérisation radicalaire en vue de la fabrication de l'amine selon une quelconque des revendications 11 à 13, des substances du groupe se composant de l'amine d'hydroxyalkyle, de l'amine de mono-isopropanol, de l'éthanolamine, de la diéthanolamine, de la triéthanolamine, du méthacrylate de diméthylaminoéthyle, du méthacrylate d'hydroxyéthyle, du méthacrylate de polyglycol et de l'acide mercaptopropionique, ainsi que des mélanges de ceux-ci sont mises en réaction avec un excitant non sulfaté soluble dans l'eau.

15. Procédé de la polymérisation radicalaire selon la revendication 14, l'excitant étant du 2-2'-azobis-(2-amidinopropane)-hydrochlorure.

16. Utilisation de l'amine selon une quelconque des revendications 11 à 13 comme additif en vue de la fabrication de coucheuses.
